# EUROPEAN PATENT APPLICATION

(11) **EP 4 841 218 A1**
(43) Date of publication of application: **18.11.2026**
(21) Application number: 26177896.3
(22) Date of filing: 11.05.2026
(51) Int. Cl.: G01F 23/72, F01M 11/12, G01F 25/20

(54) **OIL LEVEL SENSOR ENGINE START GULPING SIGNATURE**

(30) Priority: 16.05.2025 US 202519210771
(71) Applicant: Pratt & Whitney Canada Corp., Longueuil, Québec J4G 1A1 (CA)
(72) Inventor: DE OLIVEIRA, Suzana, (01BE5) Longueuil, J4G 1A1 (CA); KOLDSGAARD, Ivan, (01BE5) Longueuil, J4G 1A1 (CA); ABUKHALID, Mohammed, (01BE5) Longueuil, J4G 1A1 (CA); DOMINGO, Ritchie, (01BE5) Longueuil, J4G 1A1 (CA)
(74) Representative: Dehns

(57) **Abstract**

A system (100) comprising an aircraft engine (104) and an oil tank (102) configured to provide oil to and receive the oil from the aircraft engine (104). An oil level sensor (110) is configured to detect an oil level within the oil tank (102). A controller (114) includes control logic (120) configured to detect failure of the oil level sensor (110) and generate a failure indication responsive thereto.

## Description

### TECHNICAL FIELD

This disclosure relates generally to an oil level sensor control logic. More specifically, this disclosure relates to fault detection logic to confirm operation of oil level sensors at aircraft engine start.

### BACKGROUND

Low levels of oil within an aircraft engine cannot not only cause the aircraft engine to overheat but also reduce the aircraft engine lifespan due to deterioration of engine bearings over time. When the oil level drops too low, the flight crew is alerted through the Crew Alerting System and instructed to act by reducing the throttle level and ultimately shutting down the aircraft engine if the situation persists. Dispatch of the aircraft is not allowed if a low oil level condition is detected on the ground. Oil levels are normally monitored manually using either a dipstick or a sight glass. With an increasing demand to use the engine oil level sensor (OLS) to reliably establish oil level for dispatch, purposes, it becomes paramount to eliminate any dormant failures that could pose a risk of inhibiting or hiding a low oil level event. Robust controls for confirming the operational status of the OLS, particularly during system start, would greatly benefit assurances of reliably using Oil Level Sensors or safety critical functions.

### SUMMARY

This disclosure relates to fault detection logic for monitoring resistive-type oil level sensor operation at engine start.

In some examples, the system also includes an oil tank configured to provide oil to and receive the oil from the aircraft engine, an oil level sensor configured to detect an oil level within the oil tank. The system also includes a controller including control logic configured to detect failure of the oil level sensor and generate a failure indication responsive thereto.

Any single one or any combination of the following features may be used with the examples above. The system where the oil level sensor further may include a magnetic float configured to track an oil level within the oil tank and an electric circuit configured to determine a position of the magnetic float and generate at least one resistive output responsive to the determination of the position. To detect the failure the controller is further configured to determine movement of the magnetic float responsive to a plurality of determined positions of the magnetic float and determine the failure of the oil level sensor if the movement of the magnetic float does not comply with predetermined criteria. The controller is further configured to detect at least one resistive output from the oil level sensor, determine a status of the oil level sensor responsive to the detected at least one resistive output and generate the failure indication responsive to the determined status of the oil level sensor. To detect the failure the controller is further configured to determine if adjacent switches of the oil level sensor were activated and determine the failure of the oil level sensor responsive to a determination that adjacent switches have not been activated. The controller is further configured to detect a first resistance output from the oil level sensor during aircraft engine start and determine a status of the oil level sensor responsive to the detected first resistance output from the oil level sensor during aircraft engine start. The controller is further configured to detect a second resistance output from the oil level sensor after completion of aircraft engine start and determine the status of the oil level sensor responsive to the detected second resistance output of the oil level sensor after completion of aircraft engine start.

In other examples, the apparatus includes an oil level sensor configured to detect an oil level within an oil tank, where the oil level sensor further may include a magnetic float configured to track the oil level within the oil tank, and an electric circuit configured to determine a position of the magnetic float and generate at least one resistive output responsive to the determination of the position. The apparatus also includes a controller including control logic configured to detect failure of the oil level sensor responsive to the at least one resistive output and generate a failure indication responsive thereto.

Any single one or any combination of the following features may be used with the examples above. The apparatus where the controller is further configured to detect the at least one resistive output from the electric circuit, determine a status of the oil level sensor responsive to the detected at least one resistive output and generate the failure indication responsive to the determined status of the oil level sensor. The controller is further configured to determine if adjacent switches of the electric circuit were activated responsive to the at least one resistive output and determine the failure of the oil level sensor responsive to a determination that adjacent switches have not been activated. The controller is further configured to determine a plurality of positions of the magnetic float responsive to the at least one resistive output, determine movement of the magnetic float responsive to the determined plurality of positions of the magnetic float and determine the failure of the oil level sensor if the movement of the magnetic float is incorrect. The controller is further configured to detect at least one first resistance output from the electric circuit during aircraft engine start and determine a status of the oil level sensor responsive to the detected at least one first resistance during aircraft engine start. The controller is further configured to detect at least one second resistance output for the electric circuit after completion of aircraft engine start and determine the status of the oil level sensor responsive to the detected at least one second resistance after completion of aircraft engine start.

In still other examples, the method includes tracking an oil level within an oil tank using a magnetic float determining a position of the magnetic float using an oil level sensor, generating at least one resistive output responsive to the determination of the position of the magnetic float, detecting a failure status of an oil level sensor responsive to the at least one resistive output using a controller, and generating a failure indication responsive to the detected failure status of the oil level sensor using the controller.

Any single one or any combination of the following features may be used with the examples above. The method where the step of detecting further may include detecting the at least one resistive output from the oil level sensor and determining the failure status of the oil level sensor responsive to the detected at least one resistive output. The step of detecting further may include determining if adjacent switches of the oil level sensor were activated responsive to the at least one resistive output and determining the failure status of the oil level sensor responsive to the determination that adjacent switches have not been activated. The step of detecting further may include determining a plurality of positions of the magnetic float responsive to the at least one resistive output, determining movement of the magnetic float responsive to the determined plurality of positions of the magnetic float and determining the failure status of the oil level sensor if the movement of the magnetic float does not comply with predetermined criteria. The step of detecting further may include detecting a first resistance output from the oil level sensor during aircraft engine start and determining a status of the oil level sensor responsive to the detected first resistance output during aircraft engine start. The step of detecting further may include detecting a second resistance output for the oil level sensor after completion of aircraft engine start and determining the status of the oil level sensor responsive to the detected second resistance output after completion of aircraft engine start. The step of detecting further may include detecting the failure status responsive to starting of an engine associated with the oil tank.

Other technical features may be readily apparent to one skilled in the art from the following figures, descriptions, and claims.

### BRIEF DESCRIPTION OF THE DRAWINGS

For a more complete understanding of this disclosure and its advantages, reference is now made to the following description taken in conjunction with the accompanying drawings, in which like reference numerals represent like parts:
FIGURE 1 illustrates a block diagram of the system for monitoring the oil level within an oil tank of an aircraft engine;
FIGURE 2 illustrates a flow diagram of the fault detection logic for an oil level sensor; and
FIGURE 3 illustrates a more detailed flow diagram of the fault detection logic for an oil level sensor.

### DETAILED DESCRIPTION

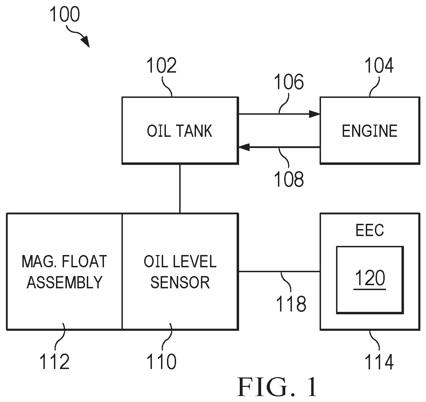

FIGURES 1 through 3, described below, and the various embodiments used to describe the principles of the present disclosure are by way of illustration only and should not be construed in any way to limit the scope of this disclosure. Those skilled in the art will understand that the principles of the present disclosure may be implemented in any type of suitably arranged device or system.

FIGURE 1 illustrates a block diagram of the system 100 to implement control logic for monitoring the oil level within an oil tank 102 of an aircraft engine 104. The oil tank 102 provides lubricating oil to the aircraft engine 104 over an outlet line 106. Similarly, lubricating oil is provided back from the aircraft engine 104 to the oil tank 102 over an inlet line 108. The oil level within the oil tank 102 is monitored by an oil level sensor 110 that is associated with the oil tank 102. The oil level sensor 110 monitors the position of a magnetic float 112 that is located within the oil tank 102. The oil level sensor 110 provides a level of the oil in the oil tank 102 to the electronic engine controller (EEC) 114. The oil level sensor 110 is an electromechanical assembly that provides the EEC 114 with a resistive oil level indication over line 118.

The oil level sensor 110 uses a magnetic float 112 within the oil tank 102 that slides along a steel shaft as the oil level within the oil tank 102 raises and lowers. The steel shaft houses an electrical circuit which is capable of detecting movement of the magnetic float assembly 112 up and down the steel shaft during engine 104 operation.

Fault detection logic 120 is implemented within the EEC 114 controller in order to detect unsafe conditions when the magnetic float 112 is unable to move freely along the steel shaft. This failure of movement of the magnetic float 112 masks the ability of the oil level sensor 110 to detect and report to the EEC 114 a low oil level condition.

Although FIGURE 1 illustrates one example of a block diagram of the system 100 for monitoring the oil level within an oil tank 102 of an aircraft engine 104, various changes may be made to FIGURE 1. For example, various components and functions in FIGURE 1 may be combined, further subdivided, replicated, rearranged, or omitted according to particular needs. Also, one or more additional components and functions may be included if needed or desired.

The fault detection logic 120 detects problems with the magnetic float 112 based on the discrete resistance values measured from the oil level sensor 110 during engine starts. During engine starts, the oil in the oil tank 102 flows out of the oil tank 102 and into the aircraft engine 104. Once the oil levels in the aircraft engine 104 are sufficient for the engine to start up, the oil flows back into the oil tank 102. The sudden drop of oil in the oil tank 102 before stabilizing to a steady-state level is known as "gulping." During gulping the fault detection logic 120 within the EEC 114 is active to detect any faults of the oil level sensor 110 occurring during this detection window.

The oil level sensor 110 is expected to behave in a certain way during gulping, and switches within the oil level sensor 110 should close in a particular sequential order. The fault detection logic 120 within the EEC 114 has preestablished criteria on the expected behavior of the oil level as detected by the oil level sensor 110 and during gulping. It is expected that the switches will be activated in a particular sequential order. If a switch within the oil level sensor 110 is skipped, a fault is detected as a switch has failed to open. If the number of switches activated during gulping is lower-than-expected, a fault is detected and the magnetic float 112 is considered to be stuck.

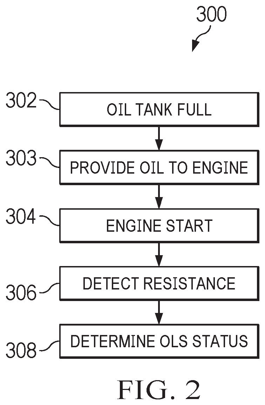

Referring now to FIGURE 2, there is illustrated a flow diagram of the operation 300 of the fault detection logic 120 for an oil level sensor 110. As discussed previously, when the oil tank 102 is full at step 302, oil may be provided to the aircraft engine 104 at step 303. Once the engine 104 has sufficient oil, the engine may be started at step 304. Responsive to start of the aircraft engine 104, various resistance readings may be detected at step 306 from the oil level sensor 110 by the EEC 114. These resistance readings are used by the fault detection logic 120 within the EEC 114 in order to determine the operating status of the oil level sensor 110 at step 308.

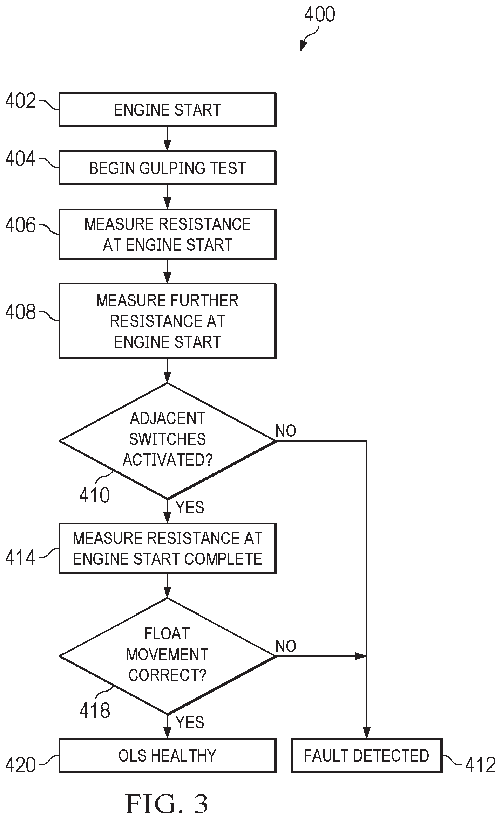

Although FIGURE 2 illustrates one example of a flow diagram of the operation 300 of the fault detection logic 120 for an oil level sensor 110, various changes may be made to FIGURE 3. For example, while shown as a series of steps, various steps in FIGURE 3 could overlap, occur in parallel, occur in a different order, or occur any number of times (including zero times).

Referring now to FIGURE 3, there is illustrated a more detailed flow diagram of the operation 400 of the fault detection logic 124 of the oil level sensor 110. The fault detection logic 120 within the EEC 114 has preestablished criteria on the expected behavior of the oil level during gulping in the form of the sequential activation of a minimum number of switches. If the oil tank 102 is full, the oil level measured by the oil level sensor 110 would correspond to a highest switch in the oil level sensor 110 being active. The engine start is commanded at step 402 and the gulping test begins at step 404. The fault detection logic 120 within the EEC 114 measures at step 406 a resistance output from the oil level sensor 110 at the beginning of the aircraft engine start operation. This measurement enables a determination of the oil level within the oil tank 102 at the beginning of the aircraft engine start.

During aircraft engine start, the magnetic float 112 is expected to move down as the level of oil within the oil tank 102 drops. This will cause the activation of adjacent switches within the oil level sensor 110 in a sequential fashion which will be detected by further measurements at step 408 of the resistance output of the oil level sensor 110. Inquiry step 410 determines responsive to these resistance measurements if adjacent switches have been activated. If not, this provides an indication of switch skipping and causes the fault detection logic 120 within the EEC 114 to generate a fault indication indicating failure of the oil level sensor 110. The switch skipping indicated by the failure to activate adjacent switches causes the generation of a fault detected message at step 412. If inquiry step 410 determines that all adjacent switches have been activated in a sequential fashion, control passes to step 414.

Once engine start is completed, a measurement of the resistance output of the oil level sensor 110 is made at step 414. Inquiry step 418 determines if the magnetic float 112 has moved according to established criteria based upon the measured resistance output values at engine start and completion of engine start. The required drop in oil level (expected behavior) during engine starts is established through engine testing. Multiple engine 104 starts are performed at different oil levels and oil temperatures to establish the minimum oil excursion in normal operation. Test points with the oil level slightly above the maximum value (overfill) are also explored to account for aircraft attitude worst case scenarios. If inquiry step 418 determines that the magnetic float 112 has not moved according to established criteria, a fault determination is made and a fault detected message is generated at step 412 indicating failure of the oil level sensor 110. If inquiry step 418 determines that the magnetic float 112 has moved according to the established criteria, an indication of the oil level sensor 110 being operational and healthy is generated at step 420. Additionally, the fault detection by the fault detection logic 120 is based not only on the signal resistance and expectation resistance measurements at the beginning and end of the engine start cycle, but also on the order of which the switches within the oil level sensor 110 are activated during the engine start process. If the switches do not activate in an expected order, a fault may be detected.

Although FIGURE 3 illustrates one example of a more detailed flow diagram of the operation 400 of the fault detection logic 124 of the oil level sensor 110, various changes may be made to FIGURE 4. For example, while shown as a series of steps, various steps in FIGURE 4 could overlap, occur in parallel, occur in a different order, or occur any number of times (including zero times).

While the above description has discussed the fault detection logic 120 being implemented within the EEC 114 associated with an aircraft engine 104, it will be appreciated that the fault detection logic 120 could be implemented within any controller associated with the aircraft engine. Additionally, the oil tank 102 may not always be full prior to engine start. The fault detection logic of FIGURE 3 accounts for this.

It may be advantageous to set forth definitions of certain words and phrases used throughout this patent document. The term "couple" and its derivatives refer to any direct or indirect communication between two or more components, whether or not those components are in physical contact with one another. The terms "include" and "comprise," as well as derivatives thereof, mean inclusion without limitation. The term "or" is inclusive, meaning and/or. The phrase "associated with," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, have a relationship to or with, or the like. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

The description in the present disclosure should not be read as implying that any particular element, step, or function is an essential or critical element that must be included in the claim scope. The scope of patented subject matter is defined only by the allowed claims. Moreover, none of the claims invokes 35 U.S.C. § 112(f) with respect to any of the appended claims or claim elements unless the exact words "means for" or "step for" are explicitly used in the particular claim, followed by a participle phrase identifying a function. Use of terms such as (but not limited to) "mechanism," "module," "device," "unit," "component," "element," "member," "apparatus," "machine," "system," "processor," or "controller" within a claim is understood and intended to refer to structures known to those skilled in the relevant art, as further modified or enhanced by the features of the claims themselves, and is not intended to invoke 35 U.S.C. § 112(f).

While this disclosure has described certain embodiments and generally associated methods, alterations and permutations of these embodiments and methods will be apparent to those skilled in the art. Accordingly, the above description of example embodiments does not define or constrain this disclosure. Other changes, substitutions, and alterations are also possible without departing from the spirit and scope of this disclosure, as defined by the following claims.

## Claims

1. A system (100) comprising:
an aircraft engine (104);
an oil tank (102) configured to provide oil to and receive the oil from the aircraft engine (104);
an oil level sensor (110) configured to detect an oil level within the oil tank (102); and
a controller (114) including control logic (120) configured to detect failure of the oil level sensor (110) and generate a failure indication responsive thereto.

2. The system of Claim 1, wherein the oil level sensor (110) further comprises:
a magnetic float (112) configured to track an oil level within the oil tank (102); and
an electric circuit configured to determine a position of the magnetic float (112) and generate at least one resistive output responsive to the determination of the position,
optionally wherein to detect the failure the controller (114) is further configured to:
determine movement of the magnetic float (112) responsive to a plurality of determined positions of the magnetic float (112); and
determine the failure of the oil level sensor (110) if the movement of the magnetic float (112) does not comply with predetermined criteria.

3. The system of Claim 1 or 2, wherein the controller (114) is further configured to:
detect at least one resistive output from the oil level sensor (110);
determine a status of the oil level sensor (110) responsive to the detected at least one resistive output; and
generate the failure indication responsive to the determined status of the oil level sensor (110).

4. The system of any preceding Claim, wherein to detect the failure the controller (114) is further configured to:
determine if adjacent switches of the oil level sensor (110) were activated; and
determine the failure of the oil level sensor (110) responsive to a determination that adjacent switches have not been activated.

5. The system of any preceding Claim, wherein the controller (114) is further configured to:
detect a first resistance output from the oil level sensor (110) during aircraft engine start; and
determine a status of the oil level sensor (110) responsive to the detected first resistance output from the oil level sensor (110) during aircraft engine start,
optionally wherein the controller (114) is further configured to:
detect a second resistance output from the oil level sensor (110) after completion of aircraft engine start; and
determine the status of the oil level sensor (110) responsive to the detected second resistance output of the oil level sensor (110) after completion of aircraft engine start.

6. An apparatus comprising:
an oil level sensor (110) configured to detect an oil level within an oil tank (102), wherein the oil level sensor (110) further comprises:
a magnetic float (112) configured to track the oil level within the oil tank (102); and
an electric circuit configured to determine a position of the magnetic float (112) and generate at least one resistive output responsive to the determination of the position; and
a controller (114) including control logic (120) configured to detect failure of the oil level sensor (110) responsive to the at least one resistive output and generate a failure indication responsive thereto.

7. The apparatus of Claim 6, wherein the controller (114) is further configured to:
detect the at least one resistive output from the electric circuit;
determine a status of the oil level sensor (110) responsive to the detected at least one resistive output; and
generate the failure indication responsive to the determined status of the oil level sensor (110).

8. The apparatus of Claim 6 or 7, wherein the controller (114) is further configured to:
determine if adjacent switches of the electric circuit were activated responsive to the at least one resistive output; and
determine the failure of the oil level sensor (110) responsive to a determination that adjacent switches have not been activated.

9. The apparatus of any of Claims 6 to 8, wherein the controller (114) is further configured to:
determine a plurality of positions of the magnetic float (112) responsive to the at least one resistive output;
determine movement of the magnetic float (112) responsive to the determined plurality of positions of the magnetic float (112); and
determine the failure of the oil level sensor (110) if the movement of the magnetic float (114) is incorrect.

10. The apparatus of any of Claims 6 to 9, wherein the controller (114) is further configured to:
detect at least one first resistance output from the electric circuit during aircraft engine start; and
determine a status of the oil level sensor (110) responsive to the detected at least one first resistance during aircraft engine start,
optionally wherein the controller (114) is further configured to:
detect at least one second resistance output for the electric circuit after completion of aircraft engine start; and
determine the status of the oil level sensor (110) responsive to the detected at least one second resistance after completion of aircraft engine start.

11. A method comprising:
tracking an oil level within an oil tank (102) using a magnetic float (112);
determining a position of the magnetic float (112) using an oil level sensor (110);
generating at least one resistive output responsive to the determination of the position of the magnetic float (112);
detecting a failure status of the oil level sensor (110) responsive to the at least one resistive output using a controller (114); and
generating a failure indication responsive to the detected failure status of the oil level sensor (110) using the controller (114).

12. The method of Claim 11, wherein the step of detecting further comprises:
detecting the at least one resistive output from the oil level sensor (110); and
determining the failure status of the oil level sensor (110) responsive to the detected at least one resistive output.

13. The method of Claim 11 or 12, wherein:
the step of detecting further comprises:
determining if adjacent switches of the oil level sensor (110) were activated responsive to the at least one resistive output; and
determining the failure status of the oil level sensor (110) responsive to the determination that adjacent switches have not been activated; and/or
the step of detecting further comprises:
determining a plurality of positions of the magnetic float (112) responsive to the at least one resistive output;
determining movement of the magnetic float (112) responsive to the determined plurality of positions of the magnetic float (112); and
determining the failure status of the oil level sensor (110) if the movement of the magnetic float (112) does not comply with predetermined criteria.

14. The method of any of Claims 11 to 13, wherein the step of detecting further comprises:
detecting a first resistance output from the oil level sensor (110) during aircraft engine start; and
determining a status of the oil level sensor (110) responsive to the detected first resistance output during aircraft engine start,
optionally wherein the step of detecting further comprises:
detecting a second resistance output for the oil level sensor (110) after completion of aircraft engine start; and
determining the status of the oil level sensor (110) responsive to the detected second resistance output after completion of aircraft engine start.

15. The method of any of Claims 11 to 14, wherein the step of detecting further comprises detecting the failure status responsive to starting of an engine (104) associated with the oil tank (102).
